# EUROPEAN PATENT SPECIFICATION

(11) **EP 0 705 653 B1**
(45) Date of publication and mention of the grant of the patent: **09.02.2000**
(21) Application number: 95913415.6
(22) Date of filing: 04.04.1995
(51) Int. Cl.: B23C 3/13

(54) **TWO-SIDE FACING DEVICE**
PLANFRÄSVORRICHTUNG FÜR ZWEISEITIGE BEARBEITUNG
SYSTEME DE DRESSAGE SUR DEUX FACES

(30) Priority: 05.04.1994 JP 6749694; 05.04.1994 JP 6749794
(43) Date of publication of application: 10.04.1996
(73) Proprietor: MITSUBISHI SHINDOH CO., LTD., Chuo-ku, Tokyo 104 (JP)
(72) Inventor: HASEGAWA, Tadao Wakamatsu Seisakusho,, Aizuwakamatsu-shi Fukushma-ken 965 (JP); SUZUKI, Hiroshi Wakamatsu Seisakusho,, Aizuwakamatsu-shi Fukushima-ken 965 (JP); IGARASHI, Tadayoshi Wakamatsu Seisakusho,, Aizuwakamatsu-shi Fukushima-ken 965 (JP); IWABUCHI, Noriyuki Wakamatsu Seisakusho,, Aizuwakamatsu-shi Fukushima-ken 965 (JP); MIZUSHITA, Koichi Wakamatsu Seisakusho,, Aizuwakamatsu-shi Fukushima-ken 965 (JP)
(74) Representative: Kruspig, Volkmar, Dipl.-Ing.
(86) International application number: JP9500645
(87) International publication number: WO9526848

(56) References cited:
- JP-A- 2 218 535
- JP-A- 62 273 015
- JP-A- 63 141 617
- JP-B- 29 005 446
- JP-Y- 9 014 059
- JP-Y- 34 013 493
- US-A- 2 064 172
- US-A- 4 197 043

## Description

### TECHNICAL FIELD

The present invention relates to dual surface facing apparatus for planar cutting and cleansing of both surfaces of a board-shaped material formed from various metals according to the precharacterizing portion of claim 1.

### BACKGROUND ART

When a metallic board material is produced by means of a hot rolling process, oxide films and stains are formed on both surfaces of the board material. In order to scrape off the oxide layers and the stains, the use of dual surface facing apparatus has been conventionally known for scraping off the surface layers of both surfaces of the board material.

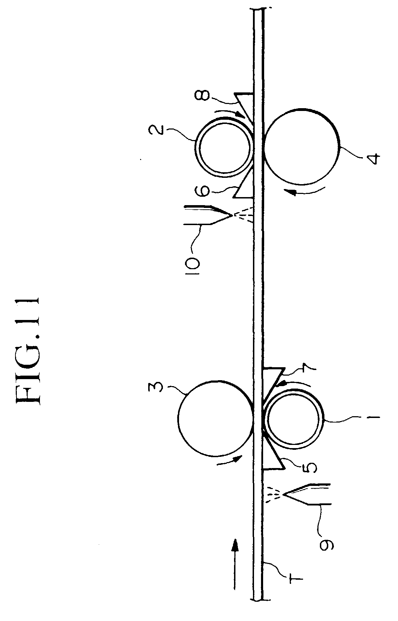

This type of dual surface facing apparatus, as shown in Fig. 11, comprises a board material conveying mechanism (not shown) for continuously advancing the board material T, upper and lower scalping cutters 1, 2 having cylindrical shapes on the radial surfaces of which are formed a plurality of cutting blades in a spiraling manner, drive mechanisms (not shown) for rotating the scalping cutters 1, 2, first and second pressing rollers 3, 4 pinching the board material T with the scalping cutters 1, 2, and inlet guides 5, 6 and outlet guides 7, 8 which support the board material T adjacent to the planar cutting areas of the scalping cutters 1, 2.

Each of the guides 5, 6, 7, 8 are for supporting the board material T by maintaining contact therewith. Spray nozzles 9, 10 for atomizing cutting oil with pressurized air and spraying it onto the board material T are respectively provided on upstream sides of inlet guides 5, 6 to prevent seizure between the inlet guides 5, 6 and the board material T.

However, with conventional apparatus as described above, there were problems in that seizure could often occur between the guides 5, 6, 7, 8 and the board material T, resulting in marks being left on the surface of the board material; the cutting performance could be poor when a soft copper alloy is being cut; and the board material surface could become roughened upon planar cutting, resulting in insufficient flatness and smoothness. Additionally, shavings could stick to the board material T, or fine particles of oxide scales which often arise during cutting could accumulate on the interior walls of the facing apparatus to form clumps which could fall onto the board material. These shavings or accumulations could be rolled with the board material T in later steps and cause defects, resulting in imperfect production and depreciation in yield.

In order to resolve these problems, the present inventors tested a method wherein the cutting oil, which is conventionally atomized and sprayed in a mist form, was ejected in large quantities onto the board material T while in liquid form, and the cutting oil was separated from the shavings which would become saturated with cutting oil. As a result, it was discovered that this method could improve the lubrication of the guides and the cutting performance of the scalping cutters, as well as reduce the occurrence of defects in the latter steps since the board material T would be cleansed when the cutting oil flowed off of the board material.

However, with regard to the inlet guide 5 corresponding to the lower scalping cutter 1, even if cutting oil in liquid form was supplied to an upstream side of the inlet guide 5, a problem remained in that seizure between the inlet guide 5 and the board material T was still common and the increase in the cutting performance of the scalping cutter 1 was not significant. Additionally, with this method, since the recovered shavings were contaminated by a large quantity of cutting oil, when melting down the shavings for recycling, there was the risk of the cutting oil setting off a steam explosion, making such recycling somewhat difficult.

### DISCLOSURE OF INVENTION

Taking the above matters into consideration, the present invention has as its objective the presentation of a dual surface facing apparatus which can prevent seizures, especially between the board material and an inlet guide corresponding to the lower scalping cutter, and improve the cutting performance of the scalping cutters.

In order to achieve the above-stated objective, the dual surface facing apparatus of the present invention comprises a board material advancement mechanism for moving a board material in a longitudinal direction; a lower scalping cutter, having a plurality of cutting blades formed on a radial surface thereof, positioned with its axis aligned in a transverse direction of the board material so as to be able to perform planar cutting of a bottom surface of the board material by means of the cutting blades; an upper scalping cutter, having a plurality of cutting blades formed on a radial surface thereof, positioned with its axis aligned in a transverse direction of the board material so as to be able to perform planar cutting of a top surface of the board material by means of the cutting blades; drive mechanisms for respectively rotating each of the scalping cutters; first and second pressing rollers, each of which opposes one of the scalping cutters with the board material sandwiched therebetween and rotates due to the movement of the board material; and first and second inlet guides, each of which lies adjacent to an upstream side of a planar cutting location of the board material corresponding to one of the scalping cutters, for respectively supporting a bottom surface and a top surface of the board material; wherein a plurality of guide bumps spaced along a transverse direction of the board material, which contact the bottom surface of the board material, are formed on said first inlet guide; cutting oil ejection nozzles for blowing cutting oil in liquid form onto the board material are provided at positions close to upstream sides of each of the plurality of guide bumps; and cutting oil supply means are provided for supplying cutting oil to the cutting oil ejection nozzles.

According to the dual surface facing apparatus of the present invention, a plurality of guide projections which contact the board material are formed on a first inlet guide adjacent to the upstream side of a lower scalping cutter, and a cutting oil ejection nozzle is formed adjacent to the upstream side of each guide projection, so that by ejecting cutting oil in liquid form from these cutting oil ejection nozzles, the cutting oil sticks to the lower surface of the board material and immediately flows between each guide projection and the board material without spreading over a wide area, so that the cutting oil is effectively supplied thereto. As a result, even with a relatively small amount of cutting oil, while seizures between the guide projections and the board material can be prevented, the cutting performance of the lower scalping cutter can be improved, and the flatness of the finally obtained board material can be improved, it is still possible to increase the cleanliness of the board material.

Furthermore, the dual surface facing apparatus of the present invention can have an opening at one end close to the scalping cutters, in order to provide a shaving recovery mechanism to collect and recover shavings and cutting oil released by the scalping cutters, and a separation mechanism to separate the material recovered by the shaving recovery mechanism into shavings and cutting oil.

In this case, while cutting oil in liquid form is supplied from oil supply means at the location of cutting of the board material, the shavings and cutting oil resulting from the cutting can be collected and recovered by the shaving recovery mechanism, then separated into shavings and cutting oil by the separation mechanism. Consequently, by using a relatively large quantity of cutting fluid in liquid form, the cutting performance of the scalping cutters can be improved, while avoiding the risk of steam explosions due to contamination by cutting oil when the shavings are melted down. Moreover, it is possible to significantly reduce the occurrence of defects in the board material because it is possible to prevent shavings or oxide scale accumulations from adhering to the board material by means of the cleansing effect of the cutting fluid.

### BRIEF DESCRIPTION OF DRAWINGS

Fig. 1 is a side view of an embodiment of a dual surface facing apparatus according to the present invention.

Fig. 2 is a plan view of the same apparatus.

Fig. 3 is a side view of an area around a lower scalping cutter of the same apparatus.

Fig. 4 is a plan view of an area around the lower scalping cutter.

Fig. 5 is a plan view of the lower scalping cutter.

Fig. 6 is a side section view of an area around the lower scalping cutter.

Fig. 7 is an enlarged section view a cutting oil ejection nozzle and an oil supply route.

Fig. 8 is a plan view of a guide projection according to another embodiment of the present invention.

Fig. 9 is a side view of a shaving recovery mechanism and a separation mechanism according to an embodiment of the present invention.

Fig. 10 is a side view of a separation mechanism according to another embodiment of the present invention.

Fig. 11 is a side view of a conventional dual surface facing apparatus.

### BEST MODE FOR CARRYING OUT THE INVENTION

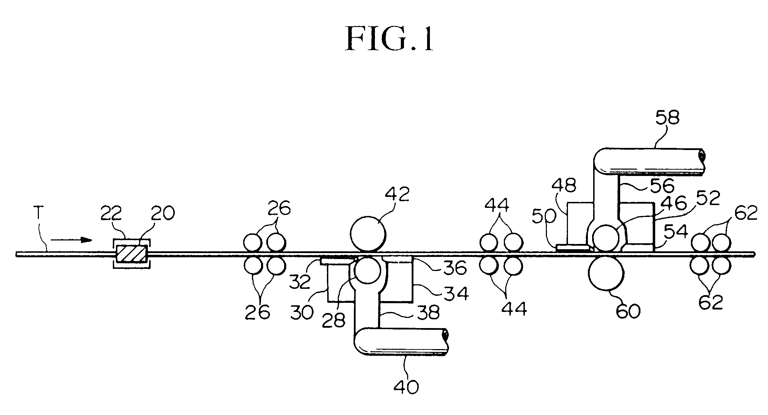

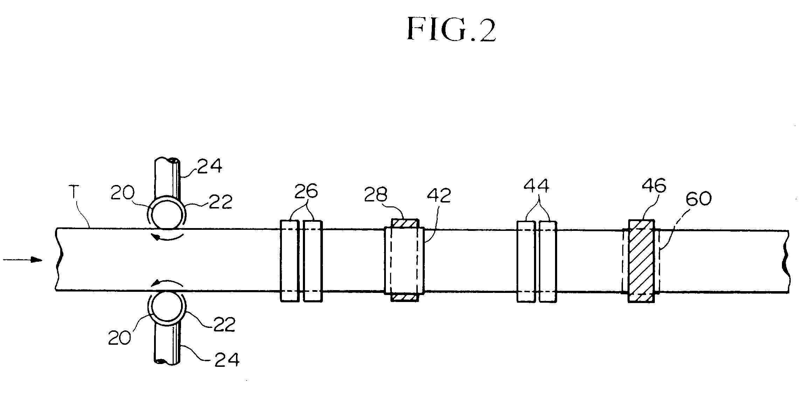

Figs. 1 and 2 are a side view and a plan view of an embodiment of a dual surface facing apparatus according to the present invention.

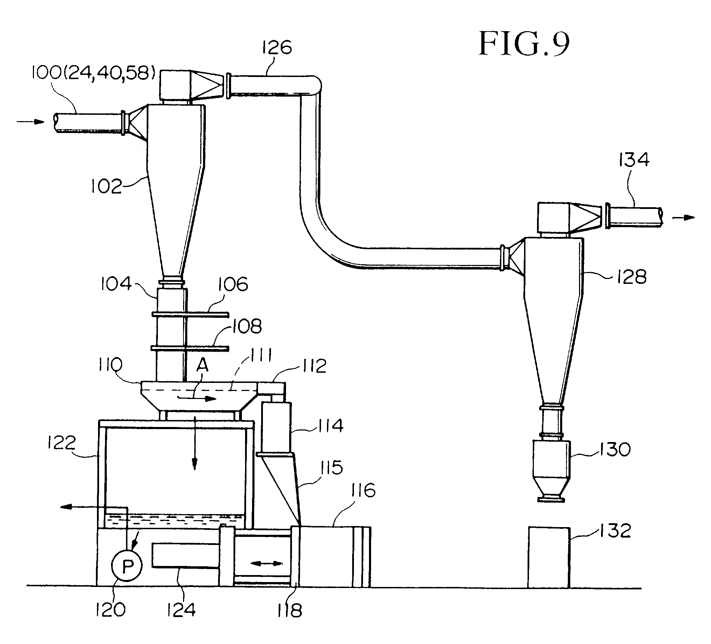

Explaining the invention in outline, reference symbol T in the drawings indicates an elongated board material, formed from a metal such as copper, which is fed at a constant rate from a previous processing step, not shown in the drawings, while maintaining a horizontal state. Both side surfaces of the board material T are cleared of any stains or oxide layers by means of a pair of side cutters 20. A residue collection cover 22 and a residue collection duct 24 for collecting shavings and cutting oil are positioned near each of the side cutters 20, and the shavings are sent through the residue collection duct 24 to the shaving recovery mechanism and separation mechanism illustrated in Fig. 9.

The board material T then passes between two groups of feed rollers 26 (board material feed mechanism), and further passes between the lower scalping cutter 28 and the back roller 42 whereby the entirety of the bottom surface is planarly cut by means of the lower scalping cutter 28. A residue collection duct 40 (part of the shaving recovery mechanism) for collecting shavings and cutting oil is positioned near the bottom of the lower scalping cutter 28, and shavings are fed therethrough to the shaving recovery mechanism and the separation mechanism illustrated in Fig. 9.

After the cutting of its bottom surface has been completed, the board material T is fed through the two groups of feed rollers 44 (board material feed mechanism), and passes between the upper scalping cutter 46 and the back roller 60 whereby the entirety of the top surface is planarly cut by means of the upper scalping cutter 46, then is fed to the next processing step by passing between two more groups of feed rollers 62 (board material feed mechanism). A residue collection duct 58 (part of the shaving recovery mechanism) for collecting shavings and cutting oil is positioned near the top of the upper scalping cutter 46, and shavings are fed therethrough to the shaving recovery mechanism and the separation mechanism illustrated in Fig. 9.

Next, the composition of each section will be explained in detail.

The side cutters 20 are cylindrical in shape as is apparent from Fig. 2, and have a plurality of spiral cutting blades formed over the entire radial surface thereof. These side cutters 20 are positioned on either side of the path of board material T with their axes perpendicular thereto, and are each rotated in the directions of the arrows in Fig. 2 by drive means not shown in the drawings. Cutting fluid in liquid form is blown from upstream onto the location of cutting of the side cutters 20 by means of nozzles not shown in the drawings. Additionally, residue collection covers 22 are attached so as to envelope each of the side cutters 20, and these residue collection covers 22 are connected to residue collection ducts 24.

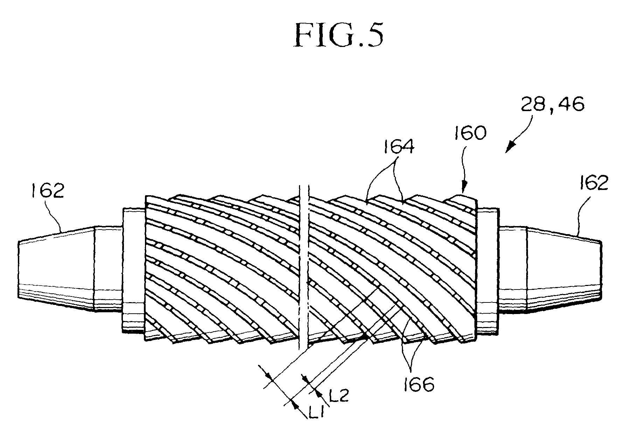

The lower scalping cutter 28 and the upper scalping cutter 46 are axially rotated by drive means not shown in the drawings, the direction of rotation being set so that the cutting blades cut the board material T in a direction opposing the direction of advancement of the board material. As shown in Fig. 5, each of these scalping cutters 28, 46 has a cutter body 160 with an elongated cylindrical shape, and attachment shafts 162 are formed on both ends of the cutter body 160. A plurality of mutually parallel grooves 164 are formed in a spiral fashion around the cutter axis on the radial surface of the cutter body 160, and elongated cutter chips 166 are affixed by means of brazing or the like at regular intervals on the surfaces of the projecting portions between each groove 164 which face in the forward direction of cutter rotation.

The length L1 of the cutting blade portion of each cutting chip 166 and the separation distance L2 between each cutting chip 166 are factors in determining the cutting form. According to experiments performed by the inventors, in order to simplify the collection and recovery of shavings, it was discovered that the lengths L1 of the cutting blade portions should be 30 ∼ 50 mm and more preferably 35 ∼ 45 mm, while the separation distances L2 should be 1.0 ∼ 2.5 mm and more preferably 1.5 ∼ 2.0 mm. In the above-given ranges, the length and curling state of the shavings become most suitable, and their vacuum withdrawal is able to be easily performed even if saturated with cutting oil. With conventional scalping cutters, the length of the cutting blade portion is usually about 25 mm and the separation distance between cutting chips is usually about 2.0 mm.

Additionally, when using the above-given dimensions for the scalping cutters, it is preferable to set the peripheral speed of cutter rotation at 300 ∼ 600 m/min and the depth of cut at 0.2 ∼ 0.7 mm. With these cutting conditions, the thickness, length and curling state become more suitable, and their vacuum withdrawal is able to be even more easily performed when saturated with cutting oil. However, the scalping cutters and cutting conditions used in the present invention are not necessarily restricted to the above ranges, and can be changed as is appropriate to the situation.

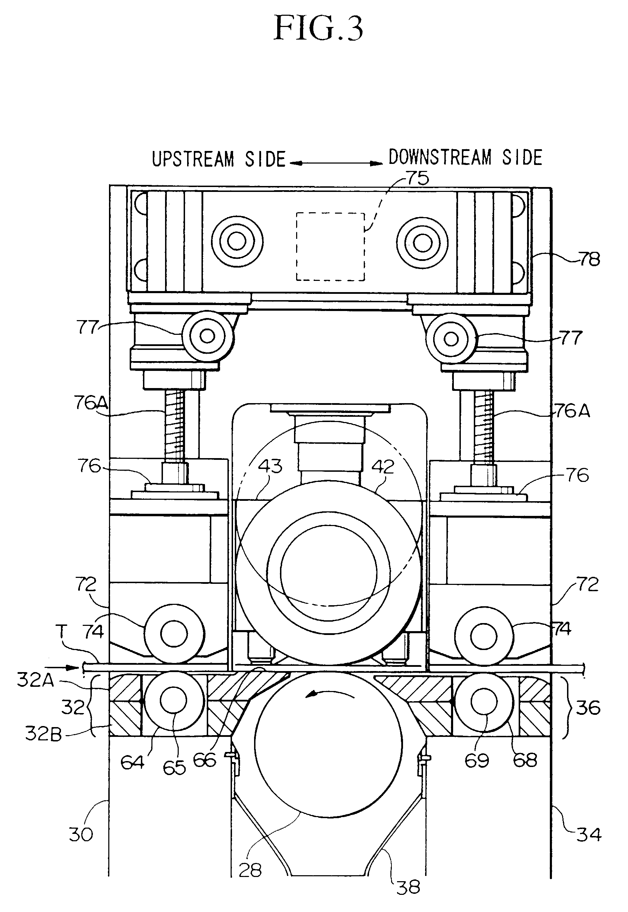

As shown in Figs. 1 and 3, guide supports 30, 34 are positioned adjacent to the upstream side and the downstream side of the lower scalping cutter 28. A first inlet guide 32 and a first outlet guide 36, forming elongated planks which extend transversely with respect to the board material T and whereof top surfaces oppose the bottom surface of the board material T in a parallel fashion, are affixed to the top surfaces of these guide supports 30, 34. Additionally, as shown in Fig. 3, a residue collection cover 38 having an opening covering the entire length of the lower scalping cutter 28 is provided between the guide supports 30, 34, and this residue collection cover 38 forms a forward end of a residue collection duct 40.

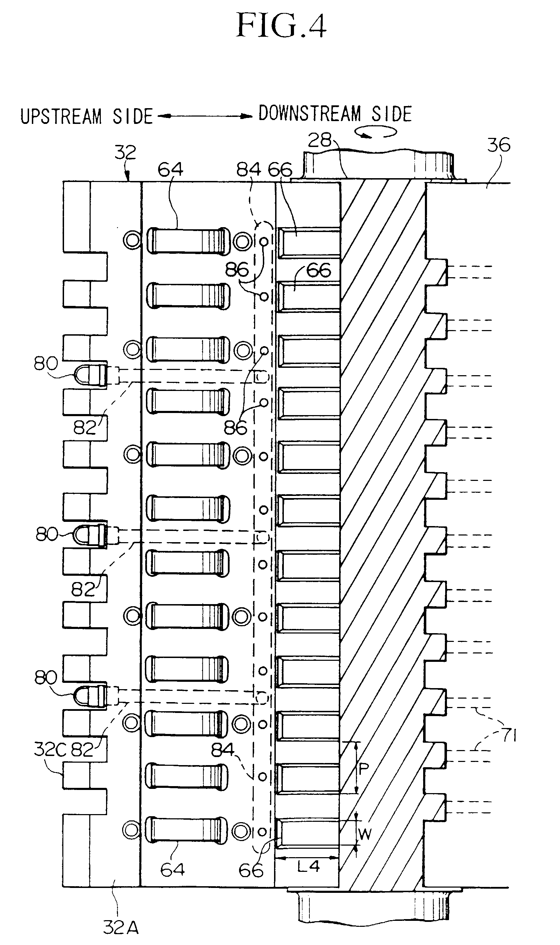

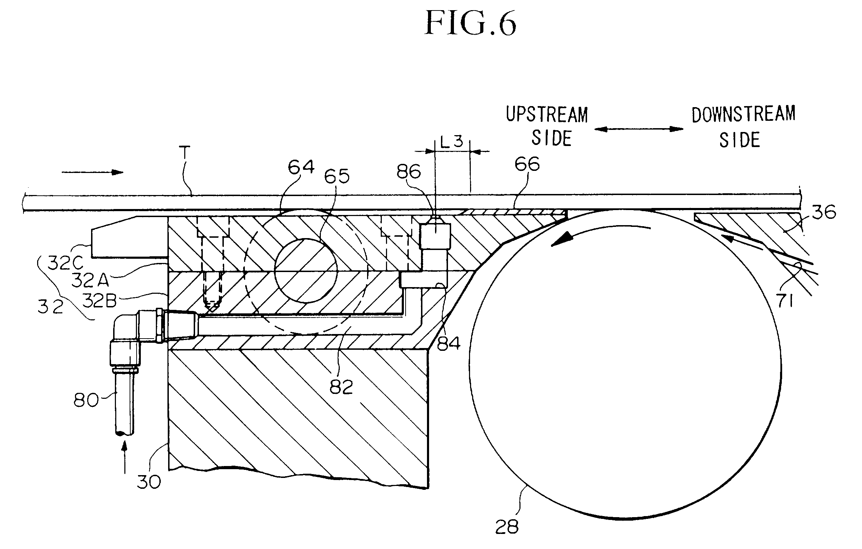

As shown in Figs. 4 and 6, the first inlet guide 32 has an upper plank 32A, a lower plank 32B and an introduction portion 32C. A horizontal shaft 65 is inserted between the upper plank 32A and the lower plank 32B, and a plurality of metallic guide rollers 64 are rotatably attached at regular intervals along the longitudinal direction of the shaft. The top of each guide roller 64 protrudes a certain distance above the top surface of the upper plank 32A, supporting the board material T by contacting and rotating along the bottom surface of the board material T.

Additionally, the end of the downstream side of the upper plank 32A projects horizontally to form an acute angle in cross-section as shown in Fig. 6, and guide bumps 66 are formed at regular intervals in the longitudinal direction of the upper surface thereof. The guide bumps 66 protrude by the same amount as do the guide rollers 64, and the top surfaces of the guide bumps contact the bottom surface of the board material T to create friction. The guide bumps 66 should preferably be formed from a wear resistant metallic material with a uniform thickness on the top surface of the upper plank 32A, specifically by flame blasting, brazing or mechanically affixing wear-resistant ceramics or metals such as Ni alloy or cemented carbide.

While each guide bump 66 is formed downstream of a corresponding guide roller 64 as shown in Fig. 4 in this embodiment, the present invention is not necessarily restricted to such a positional alignment, and they can be shifted along the axial direction of the cutters.

On the upper plank 32A, a cutting oil ejection nozzle 86 is bored adjacent to an upstream side of each guide bump 66. Furthermore, an oil supply route 84 which mutually connects each cutting oil ejection nozzle 86 and oil supply routes 82 which extend from the oil supply route 84 are formed in the lower plank 32B, and an oil supply pipe 80, leading to oil supply means not shown in the drawings, is connected to the end of each oil supply route 82. Consequently, when cutting oil is fed from the oil supply means, the cutting oil is ejected, while still in liquid form, from all of the cutting oil ejection nozzles towards the bottom surface of the board material.

The positioning of the cutting oil ejection nozzles 86 is a crucial factor in the present invention; specifically, the distance L3 between the guide bumps 66 and the cutting oil ejection nozzles 86 as indicated in Fig. 6 should preferably be about 10 ∼ 30 mm, and more preferably 15 ∼ 25 mm. If more than 30 mm, it becomes difficult for the cutting oil ejected from the cutting oil ejection nozzles 86 to flow in between the guide bumps 66 and the board material T, thereby diminishing the seizure prevention effect between the guide bumps 66 and the board material T. On the other hand, if less than 10 mm, clumping occurs in the distribution of the cutting oil which adheres to the bottom surface of the board material T, making it difficult for the cutting oil to spread evenly between the guide bumps 66 and the board material T. However, the present invention need not be restricted to the above-given ranges.

The most suitable dimensions for evenly and sufficiently supplying cutting oil between the guide bumps 66 and the board material T are, as shown in Fig. 4, about 30 ∼ 40 mm for the widths W of the guide bumps, about 60 ∼ 70 mm for the lengths L of the guide bumps and about 50 ∼ 65 mm for the pitch P of the guide bumps. However, the present invention is not necessarily restricted to these ranges, and they may be changed as is appropriate to the situation.

As shown in Fig. 3, the first outlet guide 36 has guide rollers 68, having structures similar to the guide rollers 64 of the first inlet guide 32, rotatably held at regular intervals in the longitudinal direction of the shaft 69. However, no guide bumps are formed on the top surface of the upstream end of the first outlet guide 36.

The first outlet guide 36 differs from the first inlet guide 32 in that no cutting oil ejection nozzles are formed on an upper surface thereof. Instead, as shown in Figs. 4 and 6, a plurality of nozzle holes 71 which open onto planar cutting locations of the board material T are formed on surfaces opposing the lower scalping cutter 28, and an oil supply route is formed (omitted from the drawings) for supplying cutting oil to the nozzle holes 71. Thus, oil is supplied to the lower scalping cutter 28 by ejecting cutting oil from the nozzle holes 71.

As shown in Fig. 3, a upper stationary frame 78 is provided above a back roller 42. An electric depressor screw 75 is provided in the center of the upper stationary frame 78, and a roller support 43 is raised and lowered by this electric depressor screw 75. The back roller 42 is rotatably held by the roller support 43. A pair of electric depressor screws 77 are also provided on the upper stationary frame 78 on both sides of the electric depressor screw 75. Also, mounting platforms 72 are elevatably provided at positions adjacent to the upstream side and the downstream side of the back roller 42, with guide rollers 74 being rotatably attached to the bottom surfaces of the mounting platforms 72 at positions opposing the guide rollers 64 and the guide rollers 68 with the board material T therebetween. Thus, the board material T is held between the guide rollers 64 and 74 and the guide rollers 68 and 74.

In addition to the guide rollers 74 which rotate in contact with the board material T, each mounting platform 72 is also provided with a hydraulic cylinder 76 which faces upwards. The screw 76A of each electric depressor screw 77 is coupled to the rod of each hydraulic cylinder 76, and the guide rollers 74 are independently raised and lowered by means of the electric depressor screws 77. Additionally, the contact pressures of the guide rollers 74 with respect to the board material T can be adjusted by means of the hydraulic cylinders 76.

In this embodiment, the upper scalping cutter 46 is provided with guide supports 48, second inlet guide 50, guide supports 52, second outlet guide 54, residue collection cover 56 and residue collection duct 58 which have structures respectively identical to guide supports 30, first inlet guide 32, guide supports 34, first outlet guide 36, residue collection cover 38 and residue collection duct 40 with the exception of the fact that the upper and lower positions are inverted as shown in Fig. 1. Furthermore, the back roller 60 is held by a support structure identical to the support structure of back roller 42 shown in Fig. 3.

The second inlet guide 50 may have a structure, unlike the first inlet guide 32 on which cutting oil ejection nozzles are formed, wherein oil supply nozzles for dripping cutting oil in liquid form onto the board material T are formed upstream of the second inlet guide 50. Since the cutting oil dripped onto the top surface of the board material T is able to be supplied to the location of sliding of the second inlet guide 50 and the board material T while being carried by the board material T, insufficiencies in the cutting oil are less likely to occur when compared to the first inlet guide 32.

Also in this embodiment, a total of three of the shaving recovery mechanisms shown in Fig. 9, corresponding respectively to the side cutters 20, the lower scalping cutter 28 and the upper scalping cutter 46 are provided. Three systems are provided in order to separately recover the shavings generated by the side cutters 20, and the scalping cutters 28 and 46. The shavings of the scalping cutters 28 and 46 are relatively longer, while the shavings of the side cutters are relatively shorter. Consequently, by pressing the shavings with a press 116, to be explained in further detailed below, in a manner such that the shorter shavings of the side cutters 20 are sandwiched (or wrapped) by the longer shavings of the scalping cutters 28, 46, it is possible to prevent the shorter shavings from crumbling off of the press body, thus simplifying the processing of the pressed clump of shavings.

As shown in Fig. 9, each shaving recovery mechanism of the present embodiment comprises residue collection ducts 24, 40, 58, a residue collection duct connected to these residue collection ducts, a first cyclone separator 102 to which the residue collection duct 100 is connected at an inlet, a second cyclone separator 128 to which the outlet of the first cyclone separator 102 is connected at an inlet via a duct 126, and a vacuum blower (vacuum means) not shown in the drawings which is connected to the outlet of the second cyclone separator 128 via a duct 134.

The cyclone separators 102, 128 may be such as are conventionally known, which receive air mixed with shavings and cutting oil through the inlet, create a rotational flow therein, and release the results from the outlet. During this process, centrifugal forces separate the shavings and cutting oil from the air and push them against the interior walls, after which they accumulate at the bottom. Alternatively, the shavings and cutting oil may be recovered using only a first cyclone separator 102.

A reciprocal switch dumper 104 is attached below the first cyclone separator 102. This reciprocal switch dumper 104 has two levers 106, 108, which allow the recovered material above to fall down when opened. Additionally, as long as one of the levers 106, 108 are closed, the bottom of the cyclone separator 102 has an airtight seal. Thus, by reciprocally opening and closing the levers 106, 108, the recovered material in the first cyclone separator 102 is able to be released from the bottom of the reciprocal switch dumper 104.

A screen vibration mechanism (separation mechanism) 110 is positioned underneath the reciprocal switch dumper 104. This screen vibration mechanism 110 has a screen 111 formed from a metallic mesh or the like oriented approximately horizontally, and by vibrating the screen 111, shavings on the screen 111 are sent in the direction of arrow A in the drawing. During this process, the cutting oil contained in the recovered material passes through the screen and falls therebelow, thus accumulating in the oil recovery tank 122. A pump 120 is provided in the oil recovery tank 122 for sending the cutting oil to further oil processing steps not shown in the drawings.

A discharge section 112, from which the shavings fall into a weighting hopper 114, is formed at the end of the direction of transport of the screen vibration mechanism 110. After a standard amount has accumulated inside the weighting hopper 114, the bottom opens up, allowing the shavings to fall into a press 116 via a chute 115. As mentioned above, in the present embodiment, first the shavings generated by a scalping cutter 28 (or 46) are loaded into the press 116, then the shavings generated by the side cutters 20 are loaded, and finally the shavings generated by the other scalping cutter 46 (or 28) are loaded. In the press 116, a hydraulic cylinder 124 moves a movable panel 118 so as to press the shavings, which have been loaded into the press 116 in three layers, into a brick-form. Alternatively, if there is no concern that shorter shavings could crumble off, the shavings can be recovered and pressed in a mixed state.

On the other hand, a residue collection hopper 130 is attached to the bottom of the second cyclone separator 128, so that an air-tight seal is formed by this residue collection hopper 130. Small shavings, oxide scales or cutting oil which were not able to be separated by the first cyclone separator 102 accumulate within the residue collection hopper 130. The recovered material which has accumulated in the residue collection hopper 130 is dumped into a dustbox 132 at an appropriate time.

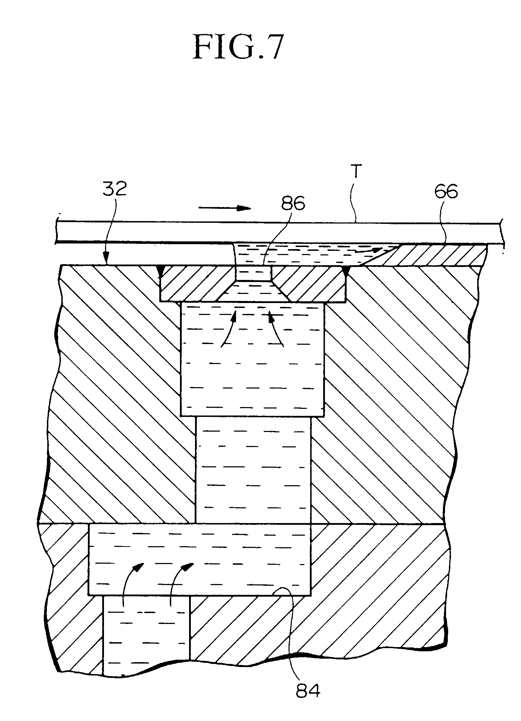

With the dual surface facing apparatus according to the above-mentioned composition, a plurality of guide bumps 66 contacting the board material T are formed at a first inlet guide 32 adjacent to an upstream side of the lower scalping cutter 28 and a cutting oil ejection nozzle 86 is formed adjacent to an upstream side of each guide bump 66, so by ejecting cutting oil in liquid form from these cutting oil ejection nozzles 86, the cutting oil is able to flow directly between each guide bump 66 and the board material while still attached to the bottom surface of the board material as shown in Fig. 7, without spreading over a wide area or dripping off of the board material.

Consequently, cutting oil is efficiently supplied, allowing the prevention of seizures between the guide bumps 66 and the board material T even with relatively limited cutting oil expenditure, improving the cutting performance of the lower scalping cutter 28, and increasing the cleanliness and flatness of the ultimately produced board material T.

Additionally, with the dual surface facing apparatus of the above embodiment, while cutting oil is supplied in liquid form to the cutting location by means of oil supply means initiated by the cutting oil ejection nozzles 86 and the nozzle holes 71, the shavings and cutting oil generated by the cutting are collected and recovered by means of the residue collection ducts 24, 40, 58, 100 and the first cyclone separator 102, then the shavings and the cutting oil are separated from the recovered material by the screen vibration mechanism 110. As a result, by using relatively large amounts of cutting oil in liquid form, the cutting performance of the scalping cutters is improved even while the risk of steam explosions due to the presence of cutting oil when the shavings are melted down is able to be eliminated, thus resolving at once the problems of conventional apparatus. Furthermore, since the cutting oil is vacuum removed from the board material T after the board material T has been saturated with cutting fluid, the cutting oil has a cleansing effect, preventing the adherence of shavings, oxide scale accumulations or the like to the board material T, and markedly reducing the occurrence of defects in the later processing.

Furthermore, since shavings and cutting oil are removed from vacuum-drawn air due to centrifugal forces by directly connecting the first and second cyclone separators 102 and 128, not only is the running cost low, but the waste is able to be well-cleansed. Additionally, the separation efficiency is able to be increased because the cutting oil is separated by transporting the shavings by means of the screen vibration mechanism 110.

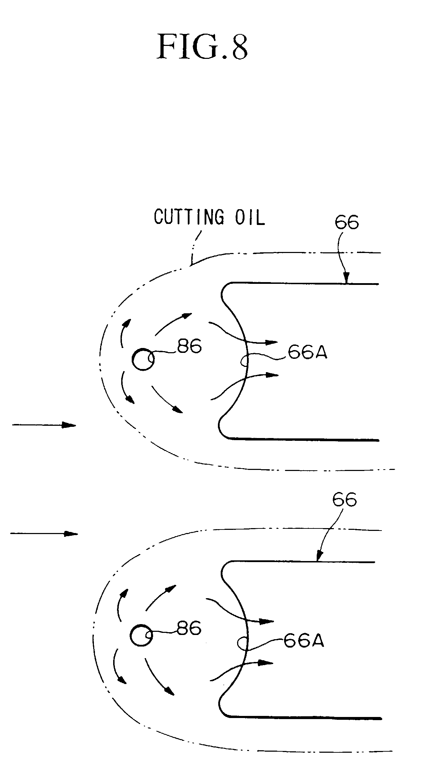

Of course, the present invention is not necessarily restricted to the above-described embodiment, and its composition may be modified as is appropriate to the situation. For example, as shown in Fig. 8, the forward ends 66A on the upstream sides of the guide bumps 66 formed on the first inlet guide 32 may be given indentations as seen in a plan view, so that the cutting oil flowing from the cutting oil ejection nozzles 86 is drawn by the movement of the board material T and collects in the central portions of the forward ends 66A, thereby being supplied between the guide bumps 66 and the board material T.

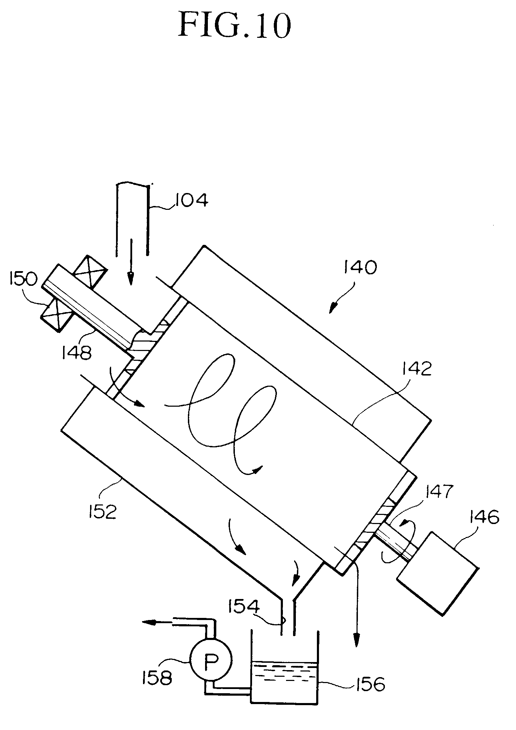

Additionally, it is possible to use a centrifugal separator 140, as shown in Fig. 10, in place of the above-mentioned screen vibration mechanism 110. This centrifugal separator 140 has a cylindrical drum 142 with its axis oriented diagonally, with one end of the drum 142 being rotatably supported by a bearing 150 via a shaft 148, and the other end being rotated by a motor 146 via a shaft 147. The outer wall of the drum 142 is formed from a screen of metallic mesh or the like, and allows passage of cutting oil while blocking the passage of shavings.

The recovered material discharged from the bottom of the above-mentioned reciprocal switch dumper 104 is loaded into the drum 142 through an upper side opening of the drum 142, gradually moves downwards while being rotated by the rotation of the drum 142, and falls into the above-mentioned weighting hopper from the bottom of the drum 142.

Additionally, a cylindrical cutting oil recovery tank (cutting oil recovery means) 152 is provided coaxially so as to envelope the outer surface of the drum 142. This cutting oil recovery tank 152 receives and recovers cutting oil which flies off of the drum 142, and a discharge outlet 154 is formed on a bottom thereof. The cutting oil which drops from the discharge outlet 154 is collected in a receptor 156, then is sent by a pump 158 to an oil processing procedure not shown in the drawings.

By using this type of centrifugal separator 140, it is possible to increase the separation efficiency when compared to the above-mentioned screen vibration mechanism 110 because the cutting oil is removed by means of centrifugal forces, thus allowing a further simplification of the remelting and reuse of the shavings.

## Claims

1. A dual surface facing apparatus comprising:
a board material advancement mechanism (26, 44, 62) for moving a board material (T) in a longitudinal direction;
a lower scalping cutter (28), having a plurality of cutting blades formed on a radial surface thereof, positioned with its axis aligned in a transverse direction of said board material so as to be able to perform planar cutting of a bottom surface of the board material by means of said cutting blades;
an upper scalping cutter (46), having a plurality of cutting blades formed on a radial surface thereof, positioned with its axis aligned in a transverse direction of said board material so as to be able to perform planar cutting of a top surface of the board material by means of said cutting blades;
drive mechanisms for respectively rotating each of said scalping cutters;
first and second pressing rollers (42, 60), each of which opposes one of said scalping cutters with said board material sandwiched therebetween and rotates due to the movement of the board material; and
first and second inlet guides (32, 50), each of which lies adjacent to an upstream side of a planar cutting location of the board material corresponding to one of said scalping cutters, for respectively supporting a bottom surface and a top surface of the board material;
characterized in that
a plurality of guide bumps (60) spaced along a transverse direction of the board material, which contact the bottom surface of the board material, are formed on said first inlet guide;
cutting oil ejection nozzles (86) for blowing cutting oil in liquid form onto the board material are provided at positions close to upstream sides of each of said plurality of guide bumps; and
cutting oil supply means (80, 82, 84) are provided for supplying cutting oil to said cutting oil ejection nozzles.

2. A dual surface facing apparatus according to claim 1, wherein a plurality of guide rollers (64) which roll in contact with said bottom surface of said board material are provided upstream of each of said cutting oil ejection nozzles on said first inlet guide.

3. A dual surface facing apparatus according to either claim 1 or 2, further comprising:
shaving recovery mechanisms (38, 40 ; 56, 58 ; 100), having one end open in the vicinity of each of said scalping cutter, which collect and recover shavings and cutting oil generated by each scalping cutter; and
separation mechanisms for separating material recovered by said shaving recovery mechanisms into shavings and cutting oil.

4. A dual surface facing apparatus according to claim 3, wherein each of said shaving recovery mechanisms comprises:
a residue collection duct (58, 40) having an opening at one end in the vicinity of one of said scalping cutters;
a cyclone separator (102) with an inlet connected to the other end of said residue collection duct; and
a vacuum withdrawal means connected to an outlet of said cyclone separator.

5. A dual surface facing apparatus according to claim 3, wherein each of said shaving recovery mechanisms comprises:
a residue collection duct (100) having an opening at one end in the vicinity of one of said scalping cutters;
a first cyclone separator (102) with an inlet connected to the other end of said residue collection duct;
a second cyclone separator (128) with an inlet connected to an outlet of said first cyclone separator; and
a vacuum withdrawal means connected to an outlet of said second cyclone separator.

6. A dual surface facing apparatus according to any one of claims 3, 4 or 5, wherein each of said separation mechanisms comprises:
a screen (111) for receiving said recovered material; and
a screen vibration mechanism (110) for separating cutting oil from the recovered material by passing said cutting oil through said screen by vibrating said screen.

7. A dual surface facing apparatus according to any one of claims 3, 4 or 5, wherein each of said separation mechanisms comprises:
a drum (142) having an outer wall which passes only cutting oil and into which said recovered material is supplied;
a drum rotation mechanism (146, 147, 148, 150) for rotating said drum; and
a cutting oil recovery means (152), positioned around an outer surface of said drum, for recovering cutting oil flying off of the drum.

8. A dual surface facing apparatus according to any one of claims 1 through 7, wherein each of said cutting blades of said scalping cutters comprises a plurality of cutting chips (166) arranged with a uniform spacing therebetween in a longitudinal direction of the cutting blade, with the length of each cutting chip being in the range of 30 to 50 mm.

9. A dual surface facing apparatus according to claim 8, wherein the peripheral speed of rotation of said scalping cutters due to said cutter drive mechanism is in the range of 300 to 600 m/min.

## Patentansprüche

1. Dual-Oberflächen-Planfräsvorrichtung mit:
einem Plattenmaterialvorschubmechanismus (26, 44, 62) zum Bewegen eines Plattenmaterials (T) in einer longitudinalen Richtung;
einer unteren Schäl-/Fräsvorrichtung (28) mit einer Vielzahl von Schneidklingen, die an einer radialen Fläche derselben ausgebildet sind, welche mit ihrer Achse in einer Querrichtung des Plattenmaterials ausgerichtet positioniert ist, so daß sie befähigt ist, einen planaren Fräsvorgang einer Bodenfläche des Plattenmaterials mit Hilfe der Schneidklingen durchzuführen;
einer oberen Schäl-/Fräsvorrichtung (46) mit einer Vielzahl von Schneidklingen, die an einer radialen Fläche derselben ausgebildet sind, welche mit ihrer Achse in einer Querrichtung des Plattenmaterials ausgerichtet positioniert ist, so daß sie einen planaren Fräsvorgang an einer oberen Fläche des Plattenmaterials mit Hilfe der Schneidklingen ausführen kann;
Antriebsmechanismen, um jede der Schäl-/Fräsvorrichtungen jeweils in Drehung zu versetzen;
ersten und zweiten Druckwalzen (42, 60), von denen jede einer der Schäl-/Fräsvorrichtung gegenüberliegt, wobei das Plattenmaterial zwischen diesen eingefaßt ist und die sich aufgrund der Bewegung des Plattenmaterials drehen; und
einer ersten und einer zweiten Eingangsführung (32, 50), von denen jede benachbart zu einer stromaufwärtigen Seite einer Planar-Frässtelle des Plattenmaterials entsprechend einem der Schäl-/Fräsvorrichtungen liegt, um jeweils eine Bodenfläche bzw. eine obere Oberfläche des Plattenmaterials abzustützen;
dadurch **gekennzeichnet,** daß
eine Vielzahl von Führungserhebungen (60) (guide bumps), welche die Bodenfläche des Plattenmaterials kontaktieren, entlang einer Querrichtung des Plattenmaterials beabstandet an der ersten Eingangsführung ausgebildet sind;
Fräsöl-Ausstoßdüsen (86) zum Aufblasen von Fräsöl in flüssiger Form auf das Plattenmaterial an Positionen dicht bei den stromaufwärtigen Seiten von jeder der Vielzahl der Führungserhebungen vorgesehen sind; und
Fräsöl-Versorgungseinrichtungen (80, 82, 84) zum Zuführen von Fräsöl zu den Fräsöl-Ausstoßdüsen vorgesehen sind.

2. Dual-Oberflächen-Planfräsvorrichtung nach Anspruch 1,
bei der eine Vielzahl von Führungsrollen (64), die in Berührung mit der Bodenfläche des Plattenmaterials rollen, stromaufwärts von jeder der Fräsöl-Ausstoßdüsen an der ersten Eingangsführung vorgesehen sind.

3. Dual-Oberflächen-Planfräsvorrichtung nach Anspruch 1 oder 2, ferner mit:
Span-Wiedergewinnungsmechanismen (38, 40; 56, 58; 100), bei denen ein Ende in der Nachbarschaft von jeder Schäl-/Fräsvorrichtung offen ist, welche Späne und Fräsöl sammeln und wiedergewinnen, die durch jede Schäl-/Fräsvorrichtung erzeugt wurden; und
Trennungsmechanismen zum Trennen des durch die Span-Wiedergewinnungsmechanismen wiedergewonnenen Materials in Späne und in Fräsöl.

4. Dual-Oberflächen-Planfräsvorrichtung nach Anspruch 3, bei dem jeder der Span-Wiedergewinnungsmechanismen folgendes aufweist:
eine Rückstandssammeldurchführung oder Rohrleitung (58, 40) mit einer Öffnung an einem Ende in der Nachbarschaft von einer der Schäl-/Fräsvorrichtungen;
eine Zyklon-Trennvorrichtung (102) mit einem mit dem anderen Ende der Rückstandssammeldurchführung oder Rohrleitung verbundenem Einlaß; und
eine Vakuum-Abzieheinrichtung, die an einem Auslaß der Zyklon-Trennvorrichtung angeschlossen ist.

5. Dual-Oberflächen-Planfräsvorrichtung nach Anspruch 3, bei der die Span-Wiedergewinnungsmechanismen folgendes aufweisen:
eine Rückstandssammeldurchführung oder Rohrleitung (100) mit einer Öffnung an einem Ende in der Nachbarschaft von einer der Schäl-/Fräsvorrichtungen;
eine erste Zyklon-Trennvorrichtung (102), bei der ein Einlaß mit dem anderen Ende der Rückstandssammeldurchführung oder Rohrleitung verbunden ist;
eine zweite Zyklon-Trennvorrichtung (128), bei der ein Einlaß mit einem Auslaß der ersten Zyklon-Trennvorrichtung verbunden ist; und
eine Vakuum-Abzieheinrichtung, die mit einem Auslaß der zweiten Zyklon-Trennvorrichtung verbunden ist.

6. Dual-Oberflächen-Planfräsvorrichtung nach irgendeinem der Ansprüche 3, 4 oder 5, bei der die Trennmechanismen folgendes aufweisen:
ein Sieb (111) zum Empfangen des wiedergewonnenen Materials; und
einen Sieb-Vibrationsmechanismus (110) zum Abtrennen des Fräsöls von dem wiedergewonnenen Material in dem dieses Fräsöl durch das in Vibration versetzte Sieb hindurchgeleitet wird.

7. Dual-Oberflächen-Planfräsvorrichtung nach irgendeinem der Ansprüche 3, 4 oder 5, bei dem jeder der Trennmechanismen folgendes aufweist:
eine Trommel (142) mit einer Außenwand, die lediglich das Fräsöl durchläßt und in die das wiedergewonnene Material zugeführt wird;
einen Trommeldrehmechanismus (146, 147, 148, 150), um die Trommel in Drehung zu versetzen; und
eine Fräsöl-Wiedergewinnungseinrichtung (152), die um eine Außenfläche der Trommel herum positioniert ist, um das von der Trommel wegfliegende Fräsöl wiederzugewinnen.

8. Dual-Oberflächen-Planfräsvorrichtung nach irgendeinem der Ansprüche 1 bis 7,
bei der jede der Schneidklingen der Schäl-/Fräsvorrichtungen eine Vielzahl von Schneidmeißeln oder Schneidchips (166) aufweist, die mit einheitlichem Abstand zwischen sich in einer longitudinalen Richtung der Schneidklingen angeordnet sind, wobei die Länge von jedem Schneidmeißel oder Schneidchip in dem Bereich von 30 bis 50 mm liegt.

9. Dual-Oberflächen-Planfräsvorrichtung nach Anspruch 8,
bei der die Umfangsgeschwindigkeit der Drehung der Schäl-/Fräsvorrichtungen aufgrund des Fräsvorrichtungsantriebsmechanismus im Bereich von 300 bis 600 mm/min liegt.

## Revendications

1. Dispositif de dressage double-surface comportant :
un mécanisme d'avancement de matériau en plaque (26, 44, 62) pour déplacer un matériau en plaque (T) dans une direction longitudinale ;
un dispositif de découpe scalpeur inférieur (28), ayant une pluralité de lames de découpe formées sur une surface radiale de celui-ci, positionné avec son axe aligné dans une direction transverse dudit matériau en plaque de manière à pouvoir effectuer une découpe plane d'une surface inférieure du matériau en plaque par l'intermédiaire desdites lames de découpe ;
un dispositif de découpe scalpeur supérieur (46), ayant une pluralité de lames de découpe formées sur une surface radiale de celui-ci, positionné avec son axe aligné dans une direction transverse dudit matériau en plaque de manière à pouvoir effectuer une découpe plane d'une surface supérieure du matériau en plaque par l'intermédiaire desdites lames de découpe ;
des mécanismes d'entraînement pour entraîner respectivement en rotation chacun desdits dispositifs de découpe scalpeurs ;
des premier et second rouleaux de compression (42, 60), situés chacun en vis-à-vis de l'un desdits dispositifs de découpe scalpeurs, ledit matériau en plaque étant enserré entre eux et étant entraîné en rotation du fait du déplacement du matériau en plaque ; et
des premier et second guides d'entrée (32, 50), situés chacun à proximité d'un côté amont d'un emplacement où est effectuée la découpe plane du matériau en plaque correspondant à l'un desdits dispositifs de découpe scalpeurs, pour supporter respectivement une surface inférieure et une surface supérieure du matériau en plaque ;
caractérisé en ce que
une pluralité de bosses de guidage (66), espacées le long d'une direction transverse du matériau en plaque, qui viennent en contact avec la surface inférieure du matériau en plaque, sont formées sur ledit premier guide d'entrée ;
des buses d'éjection d'huile de découpe (86) destinées à souffler de l'huile de découpe sous forme liquide sur le matériau en plaque sont prévues au niveau de positions voisines des côtés amont de chacune des bosses de ladite pluralité de bosses de guidage ; et
des moyens d'alimentation en huile de découpe (80, 82, 84) sont prévus pour alimenter de huile de découpe vers lesdites buses d'éjection d'huile de découpe.

2. Dispositif de dressage double-surface selon la revendication 1, dans lequel une pluralité de rouleaux de guidage (64) qui roulent en contact avec ladite surface inférieure dudit matériau en plaque sont prévus en amont de chacune desdites buses d'éjection d'huile de découpe sur ledit premier guide d'entrée.

3. Dispositif de dressage double-surface selon la revendication 1 ou 2, comportant en outre :
des mécanismes de récupération d'ébarbures (38, 40 ; 56, 58 ; 100), ayant une extrémité ouverte au voisinage de chaque dispositif de découpe scalpeur, qui collectent et récupèrent les ébarbures et l'huile de découpe générées par chaque dispositif de découpe scalpeur ; et
des mécanismes de séparation pour séparer le matériau récupéré par lesdits mécanismes de récupération d'ébarbures en ébarbures et en huile de découpe.

4. Dispositif de dressage double-surface selon la revendication 3, dans lequel chacun desdits mécanismes de récupération d'ébarbures comporte :
un conduit de collecte de résidus (58, 40) ayant une ouverture au niveau d'une première extrémité, au voisinage de l'un desdits dispositifs de découpe scalpeurs ;
un séparateur cyclonique (102) avec une entrée reliée à l'autre extrémité dudit conduit de collecte de résidus ; et
des moyens d'extraction sous vide reliés à une sortie dudit séparateur cyclonique.

5. Dispositif de dressage double-surface selon la revendication 3, dans lequel chacun desdits mécanismes de récupération d'ébarbures comporte :
un conduit de collecte de résidus (100) ayant une ouverture au niveau d'une première extrémité au voisinage de l'un desdits dispositifs de découpe scalpeurs ;
un premier séparateur cyclonique (102) avec une entrée reliée à l'autre extrémité dudit conduit de collecte de résidus ;
un second séparateur cyclonique (128) avec une entrée reliée à une sortie dudit premier séparateur cyclonique ; et
des moyens d'extraction sous vide reliés à une sortie dudit second séparateur cyclonique.

6. Dispositif de dressage double-surface selon l'une quelconque des revendications 3, 4 ou 5, dans lequel chacun desdits mécanismes de séparation comporte :
un tamis (111) pour recevoir ledit matériau récupéré ; et
un mécanisme de vibration à tamis (110) pour séparer l'huile de découpe du matériau récupéré en faisant passer ladite huile de découpe à travers ledit tamis et en faisant vibrer ledit tamis.

7. Dispositif de dressage double-surface selon l'une quelconque des revendications 3, 4 ou 5, dans lequel chacun desdits mécanismes de séparation comporte :
un tambour (142) ayant une paroi extérieure qui ne laisse passer que l'huile de découpe et dans lequel ledit matériau récupéré est introduit ;
un mécanisme de rotation de tambour (146, 147, 148, 150) destiné à entraîner une rotation ledit tambour ; et
des moyens de récupération d'huile de découpe (152), positionnés autour d'une surface extérieure dudit tambour, pour récupérer l'huile de découpe éjectée hors du tambour.

8. Dispositif de dressage double-surface selon l'une quelconque des revendications 1 à 7, dans lequel chacune desdites lames de découpe desdits dispositifs de découpe scalpeurs comporte une pluralité de pastilles de découpe (166) agencées avec un espacement uniforme entre elles dans une direction longitudinale de la lame de découpe, la longueur de chaque pastille de découpe se situant dans la plage allant de 30 à 50 mm.

9. Dispositif de dressage double-surface selon la revendication 8, dans lequel la vitesse périphérique de rotation desdits dispositifs de découpe scalpeurs due audit mécanisme d'entraînement de dispositif de découpe se situe dans la plage allant de 300 à 600 m/min.
